# EUROPÄISCHE PATENTSCHRIFT

(11) **EP 3 515 734 B1**
(45) Veröffentlichungstag und Bekanntmachung des Hinweises auf die Patenterteilung: **24.06.2020**
(21) Anmeldenummer: 17772359.0
(22) Anmeldetag: 19.09.2017
(51) Int. Cl.: B60H 1/32, B60K 25/00, B62D 21/11, F01C 21/00

(54) **HALTEANORDNUNG EINES KÄLTEMITTELVERDICHTERS AN EINER KAROSSERIE EINES KRAFTFAHRZEUGS, SOWIE KRAFTFAHRZEUG**
HOLDER ASSEMBLY OF A REFRIGERANT COMPRESSOR ON A BODYWORK OF A MOTOR VEHICLE, AND A MOTOR VEHICLE
SYSTÈME DE MAINTIEN D'UN COMPRESSEUR FRIGORIFIQUE SUR UNE CARROSSERIE D'UN VÉHICULE AUTOMOBILE ET VÉHICULE AUTOMOBILE

(30) Priorität: 26.09.2016 DE 102016218415
(43) Veröffentlichungstag der Anmeldung: 31.07.2019
(73) Patentinhaber: Bayerische Motoren Werke Aktiengesellschaft, 80809 München (DE)
(72) Erfinder: FONTEIN, Niko, 85716 Unterschleißheim (DE); OBERDORFER, Tanja, 80807 München (DE)
(86) Internationale Anmeldenummer: PCT/EP2017/073532
(87) Internationale Veröffentlichungsnummer: WO 2018/054853

(56) Entgegenhaltungen:
- DE-A1-102009 015 414
- DE-A1-102014 007 693
- JP-A- 2006 188 085

## Beschreibung

Die Erfindung betrifft eine Halteanordnung eines Kältemittelverdichters an einer

Karosserie eines Kraftfahrzeugs gemäß dem Oberbegriff von Patentanspruch 1 , sowie ein Kraftfahrzeug mit einer solchen Halteanordnung.

Halteanordnungen von Kältemittelverdichtern an Karosserien von Kraftfahrzeugen, insbesondere Kraftwagen wie beispielsweise Personenkraftwagen, sind aus dem allgemeinen Stand der Technik und insbesondere aus dem Serienfahrzeugbau bereits hinlänglich bekannt. Der jeweilige Kältemittelverdichter ist dabei zum Verdichten eines Kältemittels einer Klimaanlage ausgebildet. Dabei ist der Kältemittelverdichter beispielsweise Bestandteil einer solchen Klimaanlage, mittels welcher beispielsweise der Innenraum des jeweiligen Kraftfahrzeugs mit gekühlter Luft versorgt werden kann. Die Klimaanlage umfasst dabei beispielsweise einen von dem Kältemittel durchströmbaren Kältemittelkreislauf, in welchem der Kältemittelverdichter angeordnet ist. Somit kann das den Kältemittelkreislauf durchströmende Kältemittel mittels des Kältemittelverdichters verdichtet werden. Bei der jeweiligen Halteanordnung ist der Kältemittelverdichter zumindest mittelbar an der Karosserie, welche auch als Rohkarosserie oder Rohbau bezeichnet wird, gehalten.

Die DE 10 2009 015 414 A1 offenbart ein Elektrofahrzeug, mit mindestens einem Elektromotor und einem Getriebe, wobei das Elektrofahrzeug ausschließlich elektromotorisch durch den mindestens einen Elektromotor antreibbar ist. Der mindestens eine Elektromotor und das Getriebe sind an einer Trageinrichtung angeordnet, die elastisch an einer Karosserie des Elektrofahrzeugs befestigt ist.

Außerdem ist aus der JP 2006 188085 A eine Halteanordnung eines Klimakompressors und eines Inverters an einer Karosserie eines Kraftfahrzeugs bekannt. Der DE 10 2014 007 693 A1 ist ein Hilfsrahmen für ein Fahrzeug als bekannt zu entnehmen.

Aufgabe der vorliegenden Erfindung ist es, eine Halteanordnung und ein Kraftfahrzeug der eingangs genannten Art derart weiterzuentwickeln, dass ein besonders vorteilhaftes Geräuschverhalten realisiert werden kann.

Diese Aufgabe wird erfindungsgemäß durch eine Halteanordnung mit den Merkmalen des Patentanspruchs 1 sowie durch ein Kraftfahrzeug mit den Merkmalen des Patentanspruchs 8 gelöst. Vorteilhafte Ausgestaltungen der Erfindung sind Gegenstand der abhängigen Ansprüche.

Ein erster Aspekt der Erfindung betrifft eine Halteanordnung eines zum Verdichten eines Kältemittels einer Klimaanlage ausgebildeten Kältemittelverdichters an einer Karosserie eines Kraftfahrzeugs, welches beispielsweise als Kraftwagen, insbesondere als Personenkraftwagen, ausgebildet ist. Bei der Halteanordnung ist der Kältemittelverdichter zumindest mittelbar an der Karosserie befestigt und beispielsweise an der Karosserie festgelegt.

Um nun ein besonders vorteilhaftes Geräuschverhalten auf besonders kostengünstige Weise realisieren zu können, ist der Kältemittelverdichter unter Vermittlung eines an der Karosserie gehaltenen Trägers, an welchem wenigstens eine von dem Kältemittelverdichter unterschiedliche elektrische Komponente des Kraftfahrzeugs gehalten ist, an der Karosserie gehalten. Mit anderen Worten ist erfindungsgemäß ein Träger vorgesehen, welcher beispielsweise ein separat von der Karosserie ausgebildetes und an der Karosserie gehaltenes, insbesondere an der Karosserie festgelegtes, Bauelement des Kraftfahrzeugs ist. Somit ist der Träger beispielsweise ein von der Karosserie unterschiedliches, zusätzlich zur Karosserie vorgesehenes und an der Karosserie gehaltenes, insbesondere an der Karosserie festgelegtes, Bauelement des Kraftfahrzeugs.

An dem Träger ist wenigstens eine von dem Kältemittelverdichter unterschiedliche, zusätzlich zu dem Kältemittelverdichter vorgesehene elektrische Komponente des Kraftfahrzeugs gehalten, wobei die elektrische Komponente als elektronische Komponente ausgebildet sein kann. Die Komponente ist somit über den Träger, das heißt unter Vermittlung des Trägers an der Karosserie gehalten. Zusätzlich dazu ist auch der Kältemittelverdichter über den Träger, das heißt unter Vermittlung des Trägers an der Karosserie gehalten. Vorzugsweist ist der Kältemittelverdichter unabhängig von der Komponente am dem Träger gehalten. Alternativ oder zusätzlich ist die Komponente unabhängig vom Kältemittelverdichter an dem Träger gehalten. Durch die erfindungsgemäße Halterung des Kältemittelverdichters an der Karosserie kann eine besonders vorteilhafte, entkoppelte, insbesondere schwingungsentkoppelte, Halterung des Kältemittelverdichters an der Karosserie realisiert werden, sodass übermäßige Körperschallemissionen und somit die Entstehung von unerwünschten und beispielsweise im Innenraum des Kraftfahrzeugs von sich im Innenraum aufhaltenden Insassen wahrnehmbaren Geräuschen vermieden werden können. Dies ist dabei auf besonders einfache und kostengünstige Weise realisierbar, da dem Träger eine Doppelfunktion zukommt. Zum einen wird der Träger genutzt, um die Komponente an der Karosserie zu halten. Zum anderen wird der Träger genutzt, um auch den Kältemittelverdichter an der Karosserie zu halten.

Es wurde gefunden, dass durch die beschriebene Halterung des Kältemittelverdichters über den Träger an der Karosserie eine zumindest zweistufige Halterung des Kältemittelverdichters an der Karosserie und insbesondere eine zweistufige Entkopplung, insbesondere eine zweistufige Schwingungsentkopplung, des Kältemittelverdichters von der Karosserie, welche auch als Rohbau oder Rohkarosserie bezeichnet wird, realisiert werden kann. Mit anderen Worten kann eine Entkopplung, insbesondere eine Schwingungsentkopplung, des Kältemittelverdichters von der Karosserie auf zwei Ebenen ausgeführt werden. Im Rahmen dieser zweistufigen Entkopplung wird der Träger als Zwischenmasse genutzt, an dem der Kältemittelverdichter, beispielsweise entkoppelt, gehalten ist. Die durch den Träger gebildete Zwischenmasse wiederum ist, insbesondere entkoppelt, an der Karosserie gehalten. Dadurch können beispielsweise durch den Kältemittelverdichter, insbesondere während dessen Betriebs, bewirkte Schwingungsanregungen der Karosserie und somit übermäßige Körperschallemissionen vermieden werden, sodass die Entstehung von unangenehmen, im Innenraum des Kraftfahrzeugs wahrnehmbaren Geräuschen vermieden werden kann. Dadurch kann ein besonders hoher Fahrkomfort für sich im Innenraum aufhaltende Insassen dargestellt werden.

Durch die Nutzung des Trägers sowohl zum Haltern des Kältemittelverdichters als auch zum Haltern der Komponente kann der Einsatz von Ersatzstrukturen mit Zusatzgewichten vermieden werden, sodass die Teileanzahl, die Kosten und das Gewicht des Kraftfahrzeugs besonders gering gehalten werden können. Ferner ist es möglich, die erfindungsgemäße Halteanordnung sowohl für Kraftfahrzeuge mit Vorderrad- oder Vierradantrieb, als auch für Kraftfahrzeuge mit reinem Hinterradantrieb beziehungsweise Heckantrieb (RWD) zu verwenden, ohne dass hierzu Ersatzstrukturen mit Zusatzgewichten zum Einsatz kommen müssen. Mit anderen Worten kann die erfindungsgemäße Halteanordnung einfach und kostengünstig für unterschiedliche Bauvarianten des Kraftfahrzeugs verwendet werden, wobei sich die unterschiedlichen Bauvarianten beispielsweise hinsichtlich ihres jeweiligen Antriebskonzepts voneinander unterscheiden. Bei einer ersten der Bauvarianten weist das Kraftfahrzeug beispielsweise einen Vorderradantrieb (FWD) oder aber einen Vierradantrieb beziehungsweise Allradantrieb (4WD beziehungsweise AWD) auf. Bei der zweiten Bauvariante weist das Kraftfahrzeug einen reinen Hinterradantrieb beziehungsweise Heckantrieb (RWD) auf. Für beide Bauvarianten kann die erfindungsgemäße Halteanordnung ohne gewichts- und kostenintensive Änderungen verwendet werden, sodass die unterschiedlichen Bauvarianten auf gewichts- und kostengünstige Weise dargestellt werden können. Die Nutzung des Halters sowohl zur Halterung des Kältemittelverdichters als auch zur Halterung der Komponente an der Karosserie kann ferner insofern vorteilhaft sein, als durch die an den Träger angebundene Komponente übermäßige, durch den Kältemittelverdichter, insbesondere durch dessen Betrieb, bewirkte Schwingungen des Trägers vermieden werden können, indem der Träger beziehungsweise dessen Schwingungen mittels der als Masse fungierenden Komponente beispielsweise gedämpft werden können.

Der Träger ist schwingungsentkoppelt an der Karosserie gehalten. Dadurch kann eine übermäßige Übertragung von Schwingungen von dem Träger an die Karosserie vermieden werden, sodass eine übermäßige Schwingungsanregung der Karosserie und somit übermäßige Körperschallemissionen vermieden werden können.

Zusätzlich ist es vorgesehen, dass der Kältemittelverdichter schwingungsentkoppelt an dem Träger gehalten ist. Dadurch können bereits übermäßige Schwingungen des Trägers vermieden werden, da eine Übertragung von Schwingungen von dem Kältemittelverdichter an dem Träger besonders gering gehalten werden kann.

In vorteilhafter Ausgestaltung der Erfindung ist der Kältemittelverdichter als elektrischer Kältemittelverdichter ausgebildet, wodurch sich eine besonders vorteilhafte Halterung realisieren lässt.

Um eine schwingungstechnisch besonders vorteilhafte Halterung des Kältemittelverdichters an der Karosserie zu realisieren, ist es bei einer weiteren Ausführungsform der Erfindung vorgesehen, dass die Komponente als ein Energiespeicher zum Speichern von elektrischer Energie ausgebildet ist. Dabei ist die Komponente insbesondere als elektrochemischer Energiespeicher, insbesondere als Batterie, ausgebildet, wobei es vorzugsweise vorgesehen ist, dass die Komponente als 12- Volt-Batterie ausgebildet ist. Dabei weist die Batterie beispielsweise eine Betriebsspannung von 12 Volt oder 48 Volt auf. Dadurch kann ein besonders vorteilhaftes Geräuschverhalten realisiert werden, sodass übermäßige Schwingungen besonders gut vermieden werden können.

Ferner hat es sich als besonders vorteilhaft gezeigt, wenn die Komponente als eine elektronische Recheneinrichtung ausgebildet ist, welche auch als Steuergerät bezeichnet wird. Ferner ist es denkbar, dass die Komponente als eine Ladeelektronik ausgebildet ist. Auch dadurch können übermäßige Anregungen und Körperschallemissionen vermieden werden.

Um eine besonders vorteilhafte, zumindest im Wesentlichen schwingungsentkoppelte Halterung des Trägers an der Karosserie zu realisieren, ist es bei einer weiteren Ausführungsform der Erfindung vorgesehen, dass der Träger über wenigstens ein elastisch verformbares Element an der Karosserie abgestützt ist. Das elastisch verformbare Element ist beispielsweise aus einem elastisch verformbaren Werkstoff, insbesondere aus einem Elastomer beziehungsweise Gummi, gebildet, wobei es vorzugsweise vorgesehen ist, dass das Element einerseits die Karosserie und andererseits den Träger berührt.

Bei einer weiteren besonders vorteilhaften Ausgestaltung der Erfindung ist der Kältemittelverdichter über wenigstens ein elastisch verformbares Element an dem Träger abgestützt, wobei die Ausführungen zum ersten Element und/oder auf das zweite Element übertagen sind und umgekehrt. Somit ist beispielsweise der Kältemittelverdichter über einen verformbaren Werkstoff, insbesondere Gummi beziehungsweise über ein Elastomer, an dem Träger abgestützt, sodass eine Übertragung von Schwingungen von dem Kältemittelverdichter auf den Träger besonders gering gehalten werden kann.

Schließlich hat es sich als besonders vorteilhaft gezeigt, wenn der Kältemittelverdichter in einem Vorderwagenbereich der Karosserie angeordnet ist. Dadurch können beispielsweise eine Verschlauchung und Verluste gering gehalten werden. Die Verschlauchung umfasst beispielsweise eine Leitung, welche von dem Kältemittel durchströmbar ist. Mittels der Leitung wird das Kältemittel beispielsweise zu dem Verdichter geführt oder von dem Kältemittelverdichter abgeführt.

Ein zweiter Aspekt der Erfindung betrifft ein Kraftfahrzeug, mit wenigstens einer erfindungsgemäßen Halteanordnung. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Weitere Einzelheiten der Erfindung ergeben sich aus der nachfolgenden Beschreibung eines bevorzugten Ausführungsbeispiels mit der zugehörigen Zeichnung. Dabei zeigt:
- Fig. 1: eine schematische Darstellung einer Halteanordnung eines zum Verdichten eines Kältemittels einer Klimaanlage ausgebildeten Kältemittelverdichters an einer Karosserie eines Kraftfahrzeugs, bei welcher der Kältemittelverdichter an der Karosserie unter Vermittlung eines Trägers gehalten ist, an welchem auch wenigstens eine von dem Kältemittelverdichter unterschiedliche elektrische Komponente des Kraftfahrzeugs gehalten ist; und
- Fig. 2: eine weitere schematische Darstellung der Halteanordnung.

In den Figuren sind gleiche oder funktionsgleiche Elemente mit den gleichen Bezugszeichen versehen.

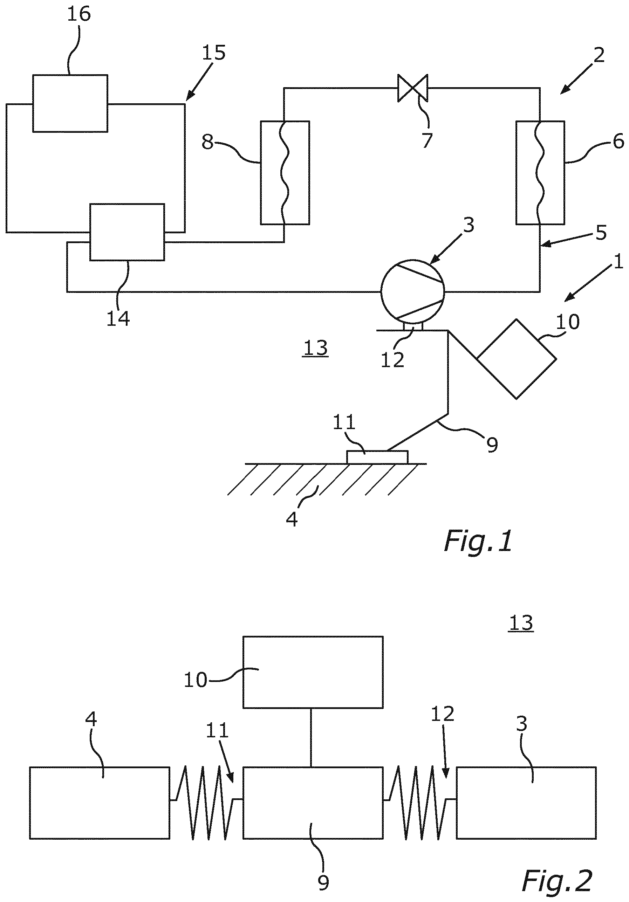

Fig. 1 und 2 zeigen in einer jeweiligen schematischen Darstellung eine im Ganzen mit 1 bezeichnete Halteanordnung eines zum Verdichten eines Kältemittels einer in den Figuren besonders schematisch dargestellten Klimaanlage 2 ausgebildeten Kältemittelverdichters 3 an einer in den Figuren ausschnittsweise und besonders schematisch dargestellten Karosserie 4 eines Kraftfahrzeugs, welches beispielsweise als Kraftwagen, insbesondere als Personenkraftwagen, ausgebildet ist. Die Klimaanlage 2 weist einen von dem Kältemittel durchströmbaren Kältemittelkreislauf 5 auf, in welchem der Kältemittelverdichter 3, welcher auch als Kompressor oder Verdichter bezeichnet wird, angeordnet ist. Die Klimaanlage 2 umfasst ferner wenigstens einen in dem Kältemittelkreislauf 5 stromab des Kältemittelverdichters 3 angeordneten Kondensator 6 zum Kondensieren des Kältemittels auf. Mittels des Kältemittelverdichters 3 wird das den Kältemittelkreislauf 5 durchströmende Kältemittel verdichtet und zum Kondensator 6 gefördert, mittels welchem das Kältemittel kondensiert wird. Stromab des Kondensators 6 ist in dem Kältemittelkreislauf 5 ein beispielsweise als Expansionsventil ausgebildetes Expansionselement 7 der Klimaanlage 2 angeordnet, wobei das Kältemittel mittels des Expansionselements 7 expandiert wird.

In Strömungsrichtung des Kältemittels durch den Kältemittelkreislauf 5 ist stromab des Expansionselements 7 und stromauf des Kältemittelverdichters 3 in dem Kältemittelkreislauf 5 ein Verdampfer 8 der Klimaanlage 2 angeordnet, wobei das Kältemittel mittels des Verdampfers 8 verdampft wird. Durch die Verdampfung des Kältemittels kann das Kältemittel Wärme von Luft aufnehmen, welche den Verdampfer 8 umströmt. Dadurch wird die den Verdampfer 8 umströmende Luft infolge eines Wärmeübergangs von der Luft über den Verdampfer 8 an das Kältemittel gekühlt. Die gekühlte Luft wird beispielsweise dem Innenraum des Kraftfahrzeugs zugeführt, wodurch der Innenraum gekühlt werden kann. Mit anderen Worten wird die Klimaanlage 2 genutzt, um den Innenraum mit gekühlter Luft zu versorgen, wobei die Luft mittels der Klimaanlage 2 gekühlt wird.

Das Kraftfahrzeug ist beispielsweise als Hybridfahrzeug oder aber vorzugsweise als Elektrofahrzeug ausgebildet. Dabei umfasst das Kraftfahrzeug wenigstens eine in den Figuren nicht dargestellte elektrische Maschine, welche beispielsweise in einem Motorbetrieb als Elektromotor betreibbar ist. In ihrem Motorbetrieb stellt die elektrische Maschine Drehmomente bereit, mittels welchen wenigstens ein Rad des Kraftfahrzeugs, insbesondere das Kraftfahrzeug insgesamt, elektrisch angetrieben werden kann. Um die elektrische Maschine in dem Motorbetrieb zu betreiben, wird die elektrische Maschine mit elektrischer Energie beziehungsweise elektrischem Strom versorgt. Hierzu umfasst das Kraftfahrzeug wenigstens einen Energiespeicher, welcher beispielsweise als elektrochemischer Energiespeicher ausgebildet ist. Der Energiespeicher ist vorzugsweise als Hochvolt-Komponente ausgebildet und weist somit eine elektrische Spannung, insbesondere eine elektrische Betriebsspannung, von mehr als 50 Volt, insbesondere von mehr als 60 Volt, auf. Insbesondere beträgt die elektrische Betriebsspannung der Hochvolt-Komponente mehrere 100 Volt, um dadurch besonders hohe elektrische Leistungen zum Antreiben des Kraftfahrzeugs realisieren zu können. Der Energiespeicher ist vorzugsweise als Hochvolt-Batterie (HV-Batterie) ausgebildet. In dem Motorbetrieb wird die elektrische Maschine beispielsweise mit in dem Energiespeicher gespeicherter elektrischer Energie versorgt. Somit ist das Kraftfahrzeug beispielsweise als batterieelektrisches Fahrzeug (Battery Electric Vehicle - BEV) ausgebildet.

Vorzugsweise ist der Kältemittelverdichter 3 als elektrischer Kältemittelverdichter, das heißt als elektrisch betreibbarer Kältemittelverdichter ausgebildet. Dies bedeutet, dass der Kältemittelverdichter 3 nicht oder nicht nur mechanisch von einer von dem Kältemittelverdichter 3 unterschiedlichen Antriebskomponente wie beispielsweise einem Verbrennungsmotor des Kraftfahrzeugs angetrieben werden kann, sondern der Kältemittelverdichter 3 ist elektrisch betreibbar beziehungsweise antreibbar. Hierzu umfasst der Kältemittelverdichter 3 beispielsweise wenigstens ein in den Figuren nicht erkennbares Verdichtungselement zum Fördern und Verdichten des Kältemittels. Ferner umfasst der Kältemittelverdichter 3 wenigstens einen Elektromotor, mittels welchem das Verdichtungselement antreibbar ist. Um den Elektromotor zu betreiben und somit um das Verdichtungselement mittels des Elektromotors anzutreiben, wird der Elektromotor mit elektrischer Energie versorgt. Außerdem ist vorliegend in dem Kältemittelkreislauf 5 eine Kühleinrichtung angeordnet, welche als Chiller 14 bezeichnet wird. Der Chiller 14 ist auch in einem von einem Kühlmedium durchströmbaren Kühlkreislauf 15 angeordnet. Das Kühlmedium ist ein Kühlfluid, insbesondere eine Kühlflüssigkeit, welches beziehungsweise welche durch den Kühlkreislauf 15 und somit durch den Chiller 14 strömen kann. Der Chiller 14 ist somit von dem Kältemittel und von dem Kühlmedium durchströmbar. Über den Chiller 14 erfolgt beispielsweise ein Wärmeaustausch zwischen dem Kältemittel und dem Kühlmedium. Im Rahmen dieses Wärmeaustausches erfolgt beispielsweise ein Wärmeübergang von dem Kühlmedium an das Kältemittel, wodurch das Kühlmedium gekühlt wird.

Des Weiteren ist in dem Kühlkreislauf 15 eine von dem Kältemittelverdichter 3 unterschiedliche Komponente 16 angeordnet, welche beispielsweise die Komponente 10 oder eine von der Komponente 10 unterschiedliche Komponente ist. Die Komponente 16 ist insbesondere eine elektrische Komponente, wobei die Komponente 16 beispielsweise eine Hochvolt-Komponente (HV-Komponente) ist und dabei eine elektrische Spannung, insbesondere eine elektrische Betriebsspannung, von mehr als 50 Volt, insbesondere von mehr als 100 Volt, aufweist. Insbesondere kann die Komponente 16 als der zuvor genannte Energiespeicher beziehungsweise HV-Speicher ausgebildet sein.

Aus Fig. 1 ist erkennbar, dass die Komponente 16 von dem Kühlmedium durchströmbar ist, sodass ein Wärmeaustausch zwischen dem Kühlmedium und der Komponente 16 erfolgen kann. Da - wie zuvor beschrieben - das Kühlmedium gekühlt wird, kann ein Wärmeübergang von der Komponente 16 an das die Komponente 16 durchströmende Kühlmedium erfolgen, wodurch die Komponenten 16 gekühlt wird. Somit kann mit Hilfe des Chillers 14 eine effektive Kühlung der Komponente 16 realisiert werden.

Um nun ein besonders vorteilhaftes Geräuschverhalten des Kraftfahrzeugs realisieren zu können, ist der Kältemittelverdichter 3 unter Vermittlung eines an der Karosserie 4 gehaltenen Trägers 9, an welchem wenigstens eine von dem Kältemittelverdichter 3 unterschiedliche elektrische Komponente 10 des Kraftfahrzeugs gehalten ist, an der Karosserie 4 gehalten. Mit anderen Worten sind der von der Karosserie 4 unterschiedliche, zusätzlich zur Karosserie 4 vorgesehene und von dem Kältemittelverdichter 3 unterschiedliche, zusätzlich zu dem Kältemittelverdichter 3 vorgesehene Träger 9 und die von dem Kältemittelverdichter 3 und von der Karosserie 4 unterschiedliche, zusätzlich zu dem Kältemittelverdichter 3 und der Karosserie 4 vorgesehene elektrische Komponente 10 vorgesehen, wobei der Träger 9 an der Karosserie 4 gehalten und beispielsweise an der Karosserie 4 festgelegt ist. Die elektrische Komponente 10 ist an dem Träger 9 gehalten und somit über den Träger 9 an der Karosserie 4 gehalten, insbesondere festgelegt. Außerdem ist auch der Kältemittelverdichter 3 an dem Träger 9 gehalten und somit über den Träger 9 an der Karoserie 4 gehalten, insbesondere festgelegt. Der Träger 9 wird also genutzt, um sowohl den Kältemittelverdichter 3 als auch die von dem Kältemittelverdichter 3 unterschiedliche, zusätzlich zu dem Kältemittelverdichter 3 vorgesehene Komponente 10 an der Karosserie 4 zu haltern. Dadurch kann eine Entkopplung, insbesondere Schwingungsentkopplung, des Kältemittelverdichters 3 von der Karosserie 4 auf zwei Ebenen beziehungsweise zwei Stufen realisiert werden. Der Träger 9 ist eine Zwischenmasse, an welcher der Kältemittelverdichter 3, vorzugsweise entkoppelt beziehungsweise schwingungsentkoppelt, gehalten ist.

Die Zwischenmasse (Träger 9) wiederum ist, vorzugsweise entkoppelt beziehungsweise schwingungsentkoppelt, an der Karosserie 4 gehalten, welche auch als Rohkarosserie oder Rohbau bezeichnet wird. Durch diese, insbesondere zumindest im Wesentlichen entkoppelte, Halterung des Kältemittelverdichters 3 an der Karosserie 4 können übermäßige Körperschallemissionen und somit unerwünschte, im Innenraum des Kraftfahrzeugs von sich im Innenraum aufhaltenden Insassen wahrnehmbare Geräusche vermieden werden, sodass ein besonders hoher Komfort realisierbar ist.

Die Komponente 10 ist beispielsweise ein weiterer Energiespeicher, welcher beispielsweise als elektrochemischer Energiespeicher, insbesondere als Batterie, ausgebildet ist. Dabei ist die Komponente 10 beispielsweise als Niedervolt-Komponente (NV-Komponente) ausgebildet, deren elektrische Spannung, insbesondere elektrische Betriebsspannung, geringer als 50 Volt ist. Die elektrische Betriebsspannung der Komponente 10 beträgt beispielsweise 12 Volt, sodass die Komponente 10 beispielsweise als 12-Volt-Batterie ausgebildet ist. Alternativ ist es denkbar, dass die Komponente 10 als elektronische Recheneinrichtung, das heißt als Steuergerät des Kraftfahrzeugs ausgebildet ist. Insbesondere ist es möglich, dass die Komponente 10 als elektronische Komponente ausgebildet ist, sodass die Komponente 10 auch als E/E-Komponente bezeichnet wird.

Zur Realisierung einer besonders vorteilhaften Entkopplung, insbesondere Schwingungsentkopplung, ist es vorzugsweise vorgesehen, dass der Träger 9 zumindest im Wesentlichen schwingungsentkoppelt an der Karosserie 4 gehalten ist. Hierzu ist beispielsweise wenigstens ein elastisch verformbares Element 1 1 vorgesehen, welches beispielsweise aus einem elastisch verformbaren Werkstoff gebildet ist. Bei dem elastisch verformbaren Werkstoff handelt es sich vorzugsweise um Gummi beziehungsweise um einen Elastomer, wobei das Element 1 1 einerseits an der Karosserie 4 und andererseits an dem Träger 9 abgestützt ist. Vorzugsweise berührt das Element 1 1 einerseits die Karosserie 4 und andererseits den Träger 9 direkt. Unter Vermittlung des Elements 1 1 ist der Träger 9 an der Karosserie 4 abgestützt. Kommt es beispielsweise zu Schwingungen des Trägers 9 und zur daraus resultierenden Relativbewegungen zwischen dem Träger 9 und der Karosserie 4, so wird das Element 1 1 elastisch verformt. Dadurch wird Schwingungsenergie in Verformungsenergie umgewandelt, wodurch die Schwingungen des Trägers 9 gedämpft werden. Dadurch kann eine übermäßige Übertragung von Schwingungen von dem Träger 9 auf die Karosserie 4 vermieden werden.

Alternativ oder zusätzlich ist es vorgesehen, dass der Kältemittelverdichter 3 zumindest im Wesentlichen schwingungsentkoppelt an dem Träger 9 gehalten ist. Hierzu ist vorzugsweise wenigstens ein elastisch verformbares Element 12 vorgesehen, unter dessen Vermittlung der Kältemittelverdichter 3 an dem Träger 9 abgestützt ist.

Vorzugsweise ist das Element 12 aus einem elastisch verformbaren Werkstoff, insbesondere aus einem Gummi beziehungsweise einem Elastomer, gebildet. Kommt es somit beispielsweise zu Schwingungen des Kältemittelverdichters 3, woraus Relativbewegungen zwischen dem Kältemittelverdichter 3und dem Träger 9 resultieren, so wird das Element 12 durch diese Relativbewegungen elastisch verformt. Dadurch wird Schwingungsenergie in Verformungsenergie umgewandelt, sodass die Schwingungen des Kältemittelverdichters 3 mittels des Elements 12 gedämpft werden können. Dadurch kann eine übermäßige Übertragung von Schwingungen von dem Kältemittelverdichter 3 auf den Träger 9 vermieden werden, sodass insgesamt eine Anregung der Karosserie 4 und somit übermäßige Körperschallemissionen vermieden werden können.

Vorzugsweise ist der Kältemittelverdichter 3 in einem Vorderwagenbereich 13 der Karosserie 4 angeordnet, sodass beispielsweise eine Verschlauchung und Verluste gering gehalten werden können. Die Komponente 10, insbesondere deren Masse, wird bei der Halteanordnung 1 beispielsweise als Entkopplungsmasse genutzt, um Schwingungen des Trägers 9 beziehungsweise des mit dem Träger 9 verbundenen Kältemittelverdichters 3 zu dämpfen beziehungsweise gering zu halten, sodass eine übermäßige Übertragung von Schwingungen von dem Kältemittelverdichter 3 auf die Karosserie 4 vermieden werden kann.

## Patentansprüche

1. Halteanordnung (1) eines zum Verdichten eines Kältemittels einer Klimaanlage (2) ausgebildeten Kältemittelverdichters (3) an einer Karosserie (4) eines Kraftfahrzeugs, bei welcher der Kältemittelverdichter (3) zumindest mittelbar an der Karosserie (4) befestigt ist, wobei der Kältemittelverdichter (3) unter Vermittlung eines an der Karosserie (4) gehaltenen Trägers (9), an welchem wenigstens eine von dem Kältemittelverdichter (3) unterschiedliche elektrische Komponente (10) des Kraftfahrzeugs gehalten ist, an der Karosserie (4) gehalten ist, und wobei der Träger (9) schwingungsentkoppelt an der Karosserie (4) gehalten ist,
**dadurch gekennzeichnet, dass**
der Kältemittelverdichter (3) schwingungsentkoppelt an dem Träger (9) gehalten ist.

2. Halteanordnung (1) nach Anspruch 1,
**dadurch gekennzeichnet, dass**
der Kältemittelverdichter (3) als elektrischer Kältemittelverdichter (3) ausgebildet ist.

3. Halteranordnung (1) nach Anspruch 1 oder 2,
**dadurch gekennzeichnet, dass**
die Komponente (3) als ein Energiespeicher zum Speichern von elektrischer Energie ausgebildet ist.

4. Halteranordnung (1) nach Anspruch 1 oder 2,
**dadurch gekennzeichnet, dass**
die Komponente (3) als eine elektronische Recheneinrichtung ausgebildet ist.

5. Halteanordnung (1) nach einem der vorhergehenden Ansprüche,
**dadurch gekennzeichnet, dass**
der Träger (9) über wenigstens ein elastisch verformbares Element (11) an der Karosserie (4) abgestützt ist.

6. Halteanordnung (1) nach einem der vorhergehenden Ansprüche,
**dadurch gekennzeichnet, dass**
der Kältemittelverdichter (3) über wenigstens ein elastisch verformbares Element (12) an dem Träger (9) abgestützt ist.

7. Halteanordnung (1) nach einem der vorhergehenden Ansprüche,
**dadurch gekennzeichnet, dass**
der Kältemittelverdichter (3) in einem Vorderwagenbereich (13) der Karosserie (4) angeordnet ist.

8. Kraftfahrzeug, mit wenigstens einer Halteanordnung (1) nach einem der vorhergehenden Ansprüche.

## Claims

1. Retention arrangement (1) of a refrigerant compressor (3) which is constructed to compress a refrigerant of an air-conditioning system (2) on a bodywork (4) of a motor vehicle, in which the refrigerant compressor (3) is at least indirectly secured to the bodywork (4), wherein the refrigerant compressor (3) is retained on the bodywork (4) by means of a carrier (9) which is retained on the bodywork (4) and on which at least one electrical component (10) of the motor vehicle which is different from the refrigerant compressor (3) is retained on the bodywork (4), and wherein the carrier (9) is retained on the bodywork (4) in a vibration-decoupled manner,
**characterized in that**
the refrigerant compressor (3) is retained on the carrier (9) in a vibration-decoupled manner.

2. Retention arrangement (1) according to Claim 1, **characterized in that**
the refrigerant compressor (3) is constructed as an electrical refrigerant compressor (3).

3. Retention arrangement (1) according to Claim 1 or 2,
**characterized in that**
the component (3) is constructed as an energy store for storing electrical energy.

4. Retention arrangement (1) according to Claim 1 or 2,
**characterized in that**
the component (3) is constructed as an electronic calculation device.

5. Retention arrangement (1) according to one of the preceding claims,
**characterized in that**
the carrier (9) is supported on the bodywork (4) by means of at least one resiliently deformable element (11).

6. Retention arrangement (1) according to one of the preceding claims,
**characterized in that**
the refrigerant compressor (3) is supported on the carrier (9) by means of at least one resiliently deformable element (12).

7. Retention arrangement (1) according to one of the preceding claims,
**characterized in that**
the refrigerant compressor (3) is arranged in a front-end region (13) of the bodywork (4).

8. Motor vehicle having at least one retention arrangement (1) according to one of the preceding claims.

## Revendications

1. Système de maintien (1) d'un compresseur frigorifique (3) servant à comprimer un fluide frigorigène d'un climatiseur (2) sur une carrosserie (4) d'un véhicule automobile, dans lequel le compresseur frigorifique (3) est fixé au moins indirectement sur la carrosserie (4), dans lequel le compresseur frigorifique (3) est maintenu sur la carrosserie (4) par le biais d'un support (9) qui est maintenu sur la carrosserie (4) et sur lequel est maintenu au moins un composant électrique (10) du véhicule automobile différent du compresseur frigorifique (3), et dans lequel le support (9) est maintenu sur la carrosserie (4) de manière découplée des vibrations,
**caractérisé en ce que** le compresseur frigorifique (3) est maintenu sur le support (9) de manière découplée des vibrations.

2. Système de maintien (1) selon la revendication 1, **caractérisé en ce que** le compresseur frigorifique (3) est réalisé sous la forme d'un compresseur frigorifique électrique (3).

3. Système de maintien (1) selon la revendication 1 ou 2,
**caractérisé en ce que** le composant (3) est réalisé sous la forme d'un accumulateur d'énergie permettant d'accumuler de l'énergie électrique.

4. Système de maintien (1) selon la revendication 1 ou 2,
**caractérisé en ce que** le composant (3) est réalisé sous la forme d'un dispositif informatique électronique.

5. Système de maintien (1) selon l'une des revendications précédentes,
**caractérisé en ce que** le support (9) prend appui sur la carrosserie (4) par l'intermédiaire d'au moins un élément élastiquement déformable (11).

6. Système de maintien (1) selon l'une des revendications précédentes,
**caractérisé en ce que** le compresseur frigorifique (3) prend appui sur le support (9) par l'intermédiaire d'au moins un élément élastiquement déformable (12).

7. Système de maintien (1) selon l'une des revendications précédentes,
**caractérisé en ce que** le compresseur frigorifique (3) est disposé dans une zone de corps avant (13) de la carrosserie (4).

8. Véhicule automobile, comprenant au moins un système de maintien (1) selon l'une des revendications précédentes.
